# FASCICULE DE BREVET EUROPEEN

(11) **EP 3 048 562 B1**
(45) Date de publication et mention de la délivrance du brevet: **31.07.2019**
(21) Numéro de dépôt: 16152192.7
(22) Date de dépôt: 21.01.2016
(51) Int. Cl.: G06K 9/00, G02F 1/01, G01K 11/12, G02F 1/17

(54) **DISPOSITIF D'ACQUISITION D'UNE IMAGE CARACTÉRISTIQUE D'UN CORPS**
VORRICHTUNG ZUR ERFASSUNG EINES CHARAKTERISTISCHEN BILDES EINES KÖRPERS
DEVICE FOR ACQUIRING A CHARACTERISTIC IMAGE OF A BODY

(30) Priorité: 23.01.2015 FR 1550539
(43) Date de publication de la demande: 27.07.2016
(73) Titulaire: COMMISSARIAT À L'ÉNERGIE ATOMIQUE ET AUX ÉNERGIES ALTERNATIVES, 75015 Paris (FR); ISORG, 38000 Grenoble (FR)
(72) Inventeur: VERILHAC, Jean-Marie, 38500 COUBLEVIE (FR)
(74) Mandataire: Cabinet Beaumont

(56) Documents cités:
- EP-A1- 2 818 919
- WO-A1-2013/156702
- US-A- 4 394 773
- US-A1- 2014 232 912
- YOUNGJONG KANG ET AL: "Broad-wavelength-range chemically tunable block-copolymer photonic gels", NATURE MATERIALS, vol. 6, no. 12, 21 octobre 2007 (2007-10-21), pages 957-960, XP055119390, ISSN: 1476-1122, DOI: 10.1038/nmat2032

## Description

### Domaine

La présente demande concerne l'acquisition d'une image caractéristique d'un corps. Elle concerne plus particulièrement l'acquisition d'une image représentative des motifs formés par les crêtes et creux de la peau d'un doigt ou de toute autre partie du corps humain (empreinte digitale, empreinte palmaire, empreinte du pied, etc.), mais peut, plus généralement, concerner d'autres applications, comme cela expliqué plus en détail à la fin de la présente description.

### Exposé de l'art antérieur

Divers dispositifs et méthodes ont été proposés pour réaliser une acquisition électronique d'une empreinte digitale, c'est-à-dire pour fournir une image électronique représentative des motifs formés par les crêtes et creux de la peau d'un doigt.

On a notamment proposé des capteurs optiques, c'est-à-dire des capteurs comportant une pluralité de cellules élémentaires d'acquisition photosensibles (ou pixels) identiques ou similaires formées dans et/ou sur un substrat, chaque cellule comportant généralement un élément de conversion photoélectrique et un ou plusieurs transistors de commande de cet élément.

En particulier, on a proposé des capteurs optiques dans lesquels la surface du capteur est sensiblement identique à la surface de l'empreinte à acquérir, et dans lesquels aucun système optique de focalisation grossissant ou réducteur (objectif) ou d'éloignement (système à base de prisme) n'est placé entre les pixels du capteur et le corps dont on souhaite acquérir une image. Les capteurs de ce type présentent l'avantage d'être relativement minces du fait de l'absence de système optique, et de pouvoir par conséquent être aisément intégrés dans de nombreux dispositifs. De tel capteurs, que l'on appellera ci-après capteurs "plats", peuvent par exemple être réalisés en technologie CMOS, les pixels étant alors formés dans et sur un substrat semiconducteur, par exemple en silicium. Toutefois, du fait de la surface relativement importante de ces capteurs, leur réalisation en technologie CMOS présente un coût élevé. Ainsi, dans de nombreuse applications, on préfère utiliser des capteurs plats réalisés en technologie TFT (de l'anglais "Thin Film Transistor" - transistor en couches minces), c'est-à-dire dans lesquels les pixels sont formés sur un substrat de support en un matériau à faible coût, par exemple du verre, par dépôts successifs de couches conductrices, de couches isolantes, et de couches semiconductrices, sur le substrat de support.

Classiquement, lors d'une phase d'acquisition d'une image représentative d'une empreinte digitale au moyen d'un capteur plat, l'utilisateur pose son doigt sur une face du capteur, par exemple la face du côté de laquelle sont disposés les pixels, et le capteur est éclairé par sa face opposée à l'aide d'une source lumineuse. De la lumière émise par la source traverse des zones transparentes de l'ensemble formé par le substrat et les pixels. La lumière est alors rétrodiffusée par le doigt en direction des éléments de conversion photoélectrique du capteur, avec, au niveau de chaque pixel, une atténuation plus ou moins importante selon que la portion de peau située au-dessus de la cellule correspond à une crête ou à un creux de la peau du doigt. A titre de variante, la source lumineuse peut être placée à côté du doigt, notamment si le substrat est non transparent, la lumière pouvant alors être amenée vers la surface du doigt par un guide d'onde plan disposé entre les pixels et le doigt. L'image de l'empreinte est acquise par le capteur pendant que le doigt de l'utilisateur est posé sur le capteur, puis l'utilisateur retire son doigt du capteur à la fin de l'acquisition.

De façon générale, un problème qui se pose dans ce type de capteur est que la présence du doigt de l'utilisateur à faible distance des pixels du capteur pendant l'acquisition, rend difficile d'éclairer le doigt sans éclairer en même temps directement les pixels du capteur. La lumière parasite qui atteint les pixels du capteur sans passer par le doigt génère alors un bruit de fond lumineux qui dégrade les performances de détection du capteur.

Le document US2014/0232912 décrit un exemple d'un dispositif d'acquisition d'images.

### Résumé

Ainsi, un mode de réalisation prévoit un dispositif d'acquisition d'une image caractéristique d'un corps, comprenant : un capteur d'image comportant une pluralité de cellules photosensibles ; et une couche en un matériau dont la couleur varie en fonction d'un paramètre physique caractéristique du corps, revêtant une face du capteur.

Selon un mode de réalisation, le paramètre est un paramètre du groupe comprenant la température du matériau, la pression appliquée sur le matériau, le taux d'humidité du matériau, le pH d'un fluide appliqué sur le matériau, et la concentration d'un marqueur chimique ou biologique appliqué sur le matériau.

Selon un mode de réalisation, le matériau est une encre thermochromique, par exemple à base de cristaux liquides thermochromiques ou à base de leuco-colorant.

Selon un mode de réalisation, le capteur comprend un substrat dans et/ou sur lequel sont disposées les cellules photosensibles.

Selon un mode de réalisation, la couche est disposée du côté de la face du substrat comportant les cellules photosensibles.

Selon un mode de réalisation, la couche est disposée du côté de la face du substrat opposée aux cellules photosensibles.

Selon un mode de réalisation, chaque cellule photosensible comprend un unique photodétecteur et au moins un transistor de commande du photodétecteur.

Selon un mode de réalisation, chaque cellule photosensible comprend plusieurs photodétecteurs sensibles dans des gammes de longueurs d'ondes distinctes, et au moins un transistor de commande des photodétecteurs.

Selon un mode de réalisation, la couche est discontinue, et est localisée uniquement en regard des cellules photosensibles du capteur.

Un autre mode de réalisation prévoit un procédé d'utilisation d'un dispositif du type susmentionné, comportant les étapes successives suivantes : placer le corps dont on souhaite acquérir une image en contact ou en quasi contact avec la couche ; retirer le corps de la couche ; et acquérir une image de la couche au moyen du capteur.

Selon un mode de réalisation, le corps est une portion de peau d'une partie du corps humain, par exemple une portion de la peau d'un doigt.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue en coupe représentant de façon schématique un exemple d'un mode de réalisation d'un dispositif d'acquisition électronique d'une empreinte digitale ;
les figures 2A, 2B et 2C sont des vues en coupe représentant de façon schématique un exemple d'un procédé d'acquisition d'une image d'une empreinte digitale au moyen du dispositif de la figure 1 ;
la figure 3 est une vue en coupe représentant de façon schématique une variante de réalisation du dispositif de la figure 1 ;
la figure 4 est une vue en coupe représentant de façon schématique une autre variante de réalisation du dispositif de la figure 1.
la figure 5 est une vue en coupe représentant de façon schématique une autre variante de réalisation du dispositif de la figure 1.

### Description détaillée

Par souci de clarté, de mêmes éléments ont été désignés par de mêmes références aux différentes figures et, de plus, les diverses figures ne sont pas tracées à l'échelle. Par ailleurs, dans la suite de la description, sauf indication contraire, des références directionnelles telles que "supérieur", "inférieur", "surmontant", "au-dessus", etc., s'appliquent à des dispositifs orientés de la façon illustrée dans les vues correspondantes, étant entendu que, dans la pratique, ces dispositifs peuvent être orientés différemment.

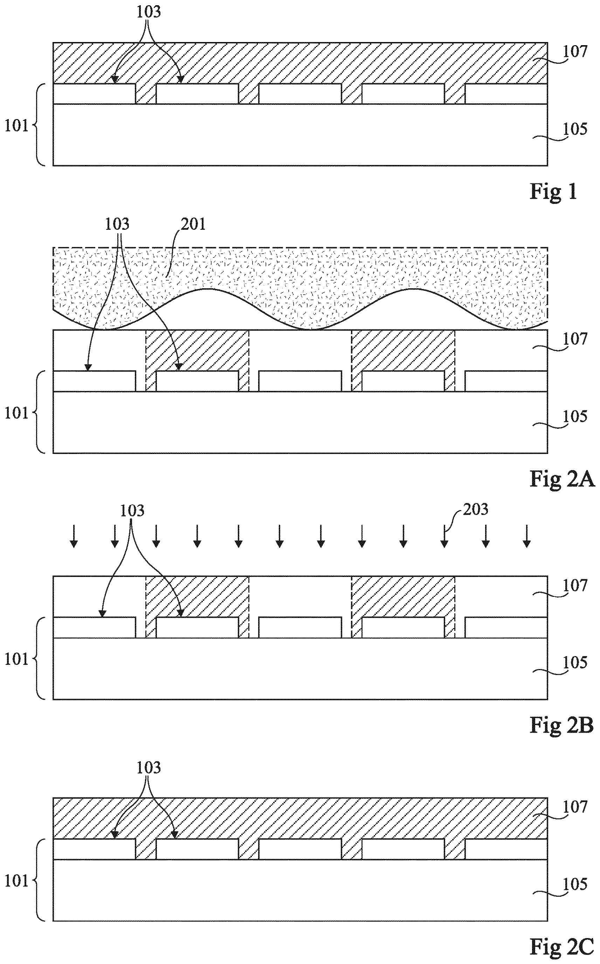

La figure 1 est une vue en coupe représentant de façon schématique un exemple d'un mode de réalisation d'un dispositif d'acquisition électronique d'une image d'une empreinte digitale.

Le dispositif de la figure 1 comprend un capteur optique 101, comportant une pluralité de cellules élémentaires d'acquisition photosensibles 103, ou pixels, identiques ou similaires. Les pixels 103 sont disposés dans et/ou sur un substrat de support 105 du capteur. Le substrat 105 peut être transparent ou opaque. A titre d'exemple, le substrat 105 est un substrat isolant, par exemple un substrat en verre ou en plastique, et les pixels 103 sont réalisés en technologie TFT sur la surface supérieure du substrat 105. A titre de variante, le substrat 105 est un substrat semiconducteur, par exemple en silicium, et les pixels 103 sont réalisés en technologie CMOS dans et sur le substrat 105, du côté de la surface supérieure du substrat 105.

Chaque pixel 103 comprend par exemple un ou plusieurs éléments de conversion photoélectrique, et un ou plusieurs transistors de commande de cet élément. L'élément de conversion photoélectrique ou photodétecteur peut être une photodiode, par exemple une photodiode à jonction PN ou une photodiode de type PIN (photodiode pincée), ou, plus généralement, tout élément adapté à convertir un rayonnement lumineux en un signal électrique, par exemple un phototransistor, une photorésistance, une photodiode organique, etc. Chaque pixel peut en outre comporter une lentille adaptée à focaliser la lumière reçue par le pixel sur l'élément de conversion photoélectrique du pixel.

Les pixels 103 sont par exemple disposés en matrice selon des lignes et des colonnes. Le pas inter-pixel du capteur 101 est par exemple de l'ordre de 50 µm, par exemple compris entre 30 et 70 µm, étant entendu que les modes de réalisation décrits ne se limitent pas à cet exemple particulier.

Dans cet exemple, le capteur 101 est un capteur optique plat du type mentionné ci-dessus, c'est-à-dire du type capable d'acquérir une image d'une empreinte digitale sans objectif grossissant ou réducteur et sans système optique d'éloignement à base de prisme entre les pixels du capteur et le doigt dont on souhaite acquérir une image. Vu de dessus, la surface du capteur 101 est par exemple du même ordre de grandeur que la surface de l'empreinte à acquérir.

On notera que la réalisation du capteur 101, et, plus particulièrement, des pixels 103 du capteur 101, n'a pas été détaillée dans la présente demande, les modes de réalisation décrits étant compatibles avec la plupart des structures existantes de capteurs d'images.

Selon un aspect d'un mode de réalisation, le dispositif de la figure 1 comprend une couche 107 en un matériau dont la couleur varie en fonction d'un paramètre physique caractéristique du corps dont on souhaite acquérir une image, c'est-à-dire en l'espèce, de la peau du doigt. A titre d'exemple, la couche 107 est une couche en un matériau thermochromique, c'est-à-dire un matériau dont la couleur varie en fonction de sa température. Dans l'exemple de la figure 1, la couche 107 revêt la surface supérieure du capteur 101.

Les figures 2A, 2B et 2C sont des vues en coupe illustrant le déroulement d'une phase d'acquisition d'une image d'une empreinte digitale au moyen du dispositif de la figure 1.

Lors d'une première étape, illustrée par la figure 2A, l'utilisateur place son doigt 201 en contact ou en quasi contact avec la surface supérieure de la couche 107, par exemple à moins de 1 mm de la surface supérieure de la couche 107. Il en résulte que la couleur de la couche 107 varie, du fait du réchauffement de cette couche par le doigt. La température de la couche 107, et donc la couleur prise par la couche 107, est différente dans les zones de la couche 107 en regard de crêtes de la peau du doigt, et dans les zones de la couche 107 en regard de creux de la peau du doigt. Ainsi, le motif formé par les crêtes et creux de la peau du doigt est retranscrit en un motif coloré (ou sombre et clair) sur la couche 107. Le temps d'application du doigt en contact ou en quasi-contact avec la couche 107 peut être ajusté en fonction de la nature de la couche 107, pour obtenir une bonne retranscription du motif de l'empreinte digitale sur la couche 107.

Lors d'une deuxième étape illustrée par la figure 2B, l'utilisateur retire son doigt du dispositif. Le motif coloré révélé sur la couche 107 lors de la première étape persiste alors pendant une certaine période de rémanence qui dépend de la nature de la couche 107. Une image du motif coloré révélé sur la couche 107 est alors acquise par le capteur 101 pendant cette période de rémanence. La couche 107 est de préférence réalisée de façon à présenter une période de rémanence compatible avec la durée d'acquisition d'une image par le capteur 101. A titre d'exemple, la couche 107 présente une période de rémanence comprise entre 1 ms et 300 s et de préférence comprise entre 100 ms et 5 s.

Lors de l'acquisition de l'image, le doigt de l'utilisateur n'étant plus situé au-dessus du capteur, le capteur peut être éclairé via la face supérieure du dispositif, comme cela est illustré par les flèches référencées 203 sur la figure 2B. La lumière d'éclairement du capteur doit alors traverser la couche 107 pour atteindre les pixels du capteur. En pratique, dans de nombreuses configurations, la lumière ambiante peut suffire à acquérir une image du motif de l'empreinte via le capteur 101. Toutefois, si le flux lumineux ambiant est trop faible pour permettre l'acquisition de l'image, par exemple s'il est inférieur à 10 nW/cm², le dispositif d'acquisition peut comporter une source d'éclairage complémentaire disposée au-dessus de la couche 107.

Après l'acquisition, à la fin de la période de rémanence, le motif coloré représentatif de l'empreinte du doigt disparaît de la couche 107, comme l'illustre la figure 2C. La couche 107 reprend alors par exemple une teinte uniforme, fonction de la température ambiante.

La couche 107 est par exemple réalisée en une encre à base de cristaux liquides thermochromiques, c'est-à-dire une encre dans laquelle sont dispersées des microcapsules remplies d'un cristal liquide dont la couleur varie en fonction de sa température.

Généralement, une encre à cristaux liquides thermochromiques est noire en dessous d'une température seuil T1, puis change progressivement de couleur en parcourant tout le spectre visible (généralement rouge puis vert puis bleu) entre la température T1 et une température T2 supérieure à la température T1, puis redevient noire au-dessus de la température T2.

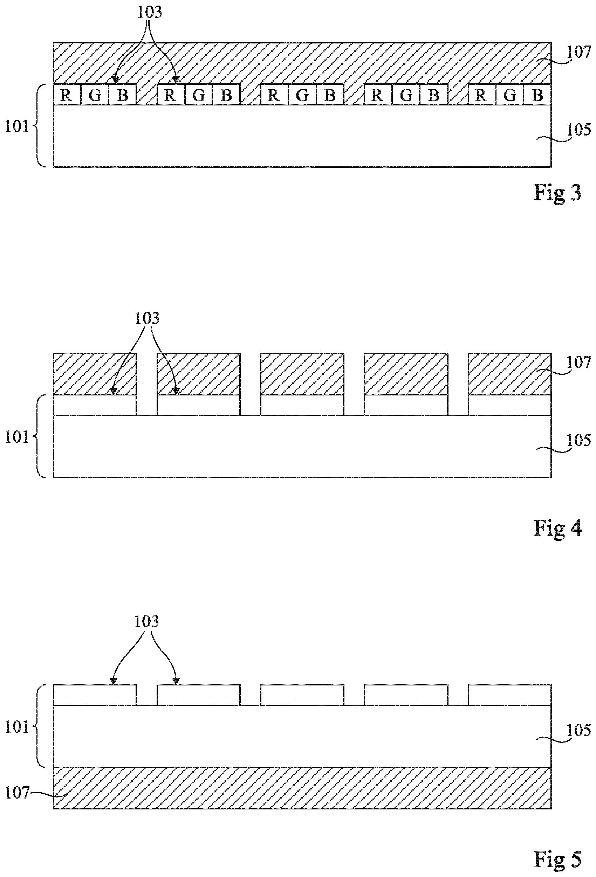

Dans ce cas, chaque pixel 103 du capteur 101 comprend de préférence plusieurs photodétecteurs sensibles dans des gammes de longueurs d'ondes distinctes, comme cela est illustré de façon schématique sur la figure 3, dans laquelle chaque pixel 103 comprend un photodétecteur sensible au rouge (R), un photodétecteur sensible au vert (G), et un photodétecteur sensible au bleu (B). Chaque photodétecteur peut comprendre un filtre coloré spécifique définissant sa gamme de sensibilité. Les filtres colorés sont de préférence des filtres à faible bande passante, par exemple inférieure à 100 nm (en longueur d'onde). Le nombre de photodétecteurs et les gammes de sensibilité respectives des photodétecteurs de chaque pixel 103 du capteur pourront être adaptés en fonction du type d'encre utilisé et de la précision de détection souhaitée. Par ailleurs, le choix de l'encre utilisée pourra faire l'objet d'un compromis entre la précision de détection souhaitée et la compatibilité du dispositif avec des températures de doigts variées. En effet, si la plage de températures T1-T2 dans laquelle la couleur de la couche 107 varie, aussi appelée bande passante de la couche 107, est étroite, la variation de couleur entre une crête et un creux de la peau d'un doigt sera relativement marquée, et pourra donc être détectée relativement aisément avec un nombre restreint de photodiodes par pixel. En revanche, le dispositif n'étant compatible qu'avec des doigts dont la température moyenne de surface est comprise entre T1 et T2, l'acquisition de certaines empreintes risque d'être impossible. A l'inverse, si la bande passante T1-T2 de la couche 107 est large, le dispositif sera compatible avec des doigts de températures moyennes variées, mais la variation de couleur entre une crête et un creux de la peau d'un doigt sera relativement peu marquée, et nécessitera un nombre de photodétecteurs par pixel plus important pour pouvoir être détectée avec une bonne précision.

Une alternative peut consister à prévoir plusieurs dispositifs d'acquisition comportant des couches 107 présentant des bandes passantes relativement étroites, juxtaposées de façon à couvrir une large gamme de températures d'utilisation avec une bonne précision, tout en conservant un nombre limité de photodétecteurs par pixel. Dans ce cas, lors d'une phase d'acquisition d'une empreinte, une étape préalable de mesure de la température du doigt de l'utilisateur peut être prévue, l'utilisateur étant ensuite invité à positionner son doigt sur le dispositif compatible avec la température mesurée.

A titre de variante, la couche 107 peut être réalisée en une encre à base d'un leuco-colorant, c'est-à-dire une encre dans laquelle sont dispersées des microcapsules remplies d'un leuco-colorant thermochromique (généralement sous forme liquide), c'est-à-dire un colorant dont les molécules peuvent passer d'une forme colorée à une forme transparente en fonction de la température. Généralement, une encre thermochromique à leuco-colorant est colorée en dessous d'une température seuil T1, puis devient progressivement transparente entre une température T1 et une température T2, et reste transparente au-delà de la température T2.

Dans ce cas, chaque pixel 103 du capteur 101 peut ne comporter qu'un seul photodétecteur, les variations de transmittance de la couche 107 étant retranscrites sur le capteur 101 en variations de niveau de gris. Par ailleurs, comme précédemment, le choix de la bande passante de l'encre utilisée pourra faire l'objet d'un compromis entre la précision de détection souhaitée et la compatibilité du dispositif avec des températures de doigts variées. On notera toutefois que les bandes passantes des encres thermochromiques à leuco-colorant sont généralement nettement plus étendues que les bandes passantes des encres thermochromiques à cristaux liquides.

A titre d'exemple illustratif, la température moyenne de surface d'un doigt est généralement comprise entre 36 et 41°C, la différence de température entre une crête et un creux de la peau d'un doigt au niveau de la surface supérieure du dispositif peut être comprise entre 0,01 et 0,1°C, par exemple de l'ordre de 0,03°C, la bande passante d'une encre thermochromique à cristaux liquides peut être comprise entre 0,1 et 1°C, et la bande passante d'une encre thermochromique à leuco-colorant peut être comprise entre 2 et 5°C.

Pour les encres à cristaux liquides comme pour les encres à leuco-colorant, les dimensions des microcapsules sont de préférence inférieures aux dimensions des pixels 103 du capteur 101. A titre d'exemple, le diamètre des microcapsules est au moins 10 fois inférieur au pas inter-pixel du capteur. A titre d'exemple, le diamètre des microcapsules est compris entre 1 et 5 µm.

La couche 107 peut par exemple être déposée par sérigraphie, par impression jet d'encre, sous forme d'un spray ("spray coating"), par enduction centrifuge ("spin coating"), ou, plus généralement, par toute autre méthode de dépôt connue. A titre d'exemple, l'épaisseur de la couche 107 est comprise entre 1 et 100 µm.

Une couche de protection, non représentée, peut optionnellement revêtir la surface supérieure de la couche 107. La couche de protection est de préférence relativement transparente à la lumière, aux longueurs d'ondes de détection du capteur 101. De plus la couche de protection est de préférence suffisamment mince pour ne pas perturber la retranscription du motif d'empreinte digitale sur la couche 107. A titre d'exemple non limitatif, la couche de protection est une couche de parylène, une couche de nitrure de silicium, une couche d'oxyde d'alumine, ou une couche d'un polymère fluoré de type CYTOP. La couche de protection a par exemple une épaisseur inférieure à 1 µm, par exemple de l'ordre de 100 nm. La couche de protection est par exemple déposée par dépôt en couches monoatomiques (ALD), par dépôt chimique en phase vapeur (CVD, PECVD), par voie liquide, par évaporation, ou, plus généralement, par toute autre méthode de dépôt connue. Cette couche peut présenter une conductivité thermique isotrope ou anisotrope.

Par ailleurs, le capteur 101 peut optionnellement comporter un film d'encapsulation, non représenté, disposé entre les pixels 103 et la couche 107, notamment pour protéger le capteur 101 mécaniquement (par exemple contre les chocs) et/ou vis-à-vis de l'environnement (humidité, ... etc.).

La figure 4 est une vue en coupe illustrant de façon schématique une variante de réalisation d'un dispositif d'acquisition d'empreintes digitales du type décrit en relation avec les figures 1 à 3.

Dans l'exemple de la figure 4, le dispositif d'acquisition comprend les mêmes éléments que dans l'exemple décrit en relation avec les figures 1 et 3, et diffère de l'exemple des figures 1 et 3 en ce que, dans l'exemple de la figure 4, la couche 107 n'est pas une couche continue revêtant toute la surface du capteur 101, mais est une couche discontinue revêtant uniquement les pixels 103 ou une partie de la surface de chaque pixel 103. Dans l'exemple de la figure 4, la couche 107 peut être déposée par toute méthode connue permettant un dépôt localisé du matériau la constituant, par exemple par sérigraphie, impression jet d'encre, héliographie, flexographie, etc. A titre de variante, la couche 107 peut, dans un premier temps, être déposée sur toute la surface du capteur 101, puis être retirée localement, par exemple entre les pixels 103, par toute méthode adaptée de retrait localisé, par exemple par ablation laser, lithographie ou photolithographie suivie d'une gravure, etc.

Dans l'exemple de la figure 4, la discrétisation de la couche 107 en plots localisés sur les pixels permet notamment d'améliorer la résolution spatiale de l'image en limitant la diffusion thermique entre les pixels.

La figure 5 est une vue en coupe illustrant de façon schématique une autre variante de réalisation d'un dispositif d'acquisition d'empreintes digitales du type décrit en relation avec les figures 1 à 4.

Le dispositif de la figure 5 diffère des exemples décrits en relation avec les figures 1 à 4 essentiellement en ce que, dans l'exemple de la figure 5, la couche de couleur variable 107 est disposée du côté de la face inférieure du substrat 105, c'est-à-dire du côté du substrat 105 opposé aux pixels 103.

Le fonctionnement du dispositif de la figure 5 est similaire ou identique à ce qui a été décrit précédemment, à la différence près que, lors d'une phase d'acquisition d'une image d'une empreinte digitale, le doigt (non représenté) de l'utilisateur est placé sur la face inférieure du dispositif (en contact ou en quasi contact avec la face inférieure de la couche 107) pendant la phase de retranscription du motif de l'empreinte sur la couche 107. Lors de l'acquisition proprement dite de l'image par le capteur 101 (après le retrait du doigt de l'utilisateur), le capteur est éclairé par sa face inférieure, la lumière d'éclairement traversant la couche 107 et le substrat 105 pour atteindre les pixels 103. On notera que dans cette variante de réalisation, le substrat 105 est choisi pour être transparent aux longueurs d'ondes de détection du dispositif. A titre d'exemple, le substrat 105 est en verre.

Un avantage des modes de réalisation décrits est qu'ils permettent de réaliser un dispositif d'acquisition particulièrement compact et simple à réaliser. En particulier, la gestion de l'éclairage du capteur est significativement simplifiée par rapport aux capteurs d'empreintes digitales optiques existants.

Des modes de réalisation particuliers ont été décrits. Diverses variantes et modifications apparaîtront à l'homme de l'art.

En particulier, les modes de réalisation décrits ne se limitent pas à l'exemple particulier d'application décrit en relation avec les figures 1 à 5, à savoir l'application à l'acquisition d'empreintes digitales. L'homme du métier saura notamment adapter les modes de réalisation décrits à des dispositifs d'acquisition d'une image représentative de motifs de la peau de toute autre partie du corps humain, par exemple des motifs de la paume de la main, du pied, etc. En outre les modes de réalisation décrits ne se limitent pas à l'acquisition d'images caractéristiques de portions du corps humain. Par exemple, les modes de réalisation décrits peuvent être adaptés pour réaliser un dispositif d'acquisition d'une image représentative d'une signature, par exemple thermique, de tout type de corps, par exemple d'un dispositif électronique.

En outre, les modes de réalisation ne se limitent pas à l'exemple particulier décrit en relation avec les figures 1 à 5 dans lequel la couche 107 de couleur variable est une couche en un matériau thermochromique. Plus généralement, la couche de couleur variable peut être en tout matériau dont la couleur varie, de préférence de façon réversible, en fonction d'un paramètre physique quelconque caractéristique du corps dont on souhaite acquérir une image. A titre d'exemple, dans le cas d'un dispositif d'acquisition d'empreinte digitale, la couche 107 peut être en un matériau piézochromique (par exemple une encre piézochromique), c'est-à-dire un matériau dont la couleur varie en fonction de la pression qui lui est appliquée, ou en un matériau hydrochromique (par exemple une encre hydrochromique), c'est-à-dire un matériau dont la couleur varie en fonction de son taux d'humidité, ou en un matériau dont la couleur varie en fonction du pH d'un fluide appliqué à sa surface, ou en un matériau dont la couleur varie en fonction de la concentration d'un marqueur chimique ou biologique appliqué à sa surface. Tous ces paramètres physiques sont en effet caractéristiques de la peau humaine, et leurs variations au niveau de la surface de la couche 107 sont susceptibles de permettre de discriminer les crêtes des creux de la peau d'un doigt, ou plus généralement, de discriminer tous types de structurations de la peau d'une portion du corps humain.

De plus, les modes de réalisation décrits ne se limitent pas à l'exemple décrit en relation avec les figures 1 à 5 dans lequel le capteur 101 est un capteur plat. L'homme du métier saura adapter les modes de réalisation décrits au cas où le capteur 101 comprend un système optique grossissant ou réducteur, par exemple un objectif, ou un système optique à base de prisme, entre les pixels du capteur et la couche 107.

De plus, les modes de réalisation décrits sont compatibles avec des substrats (105 dans les exemples représentés) rigides, souples ou conformables.

## Revendications

1. Dispositif d'acquisition d'une image caractéristique d'un corps (201), comprenant :
un capteur d'image (101) comportant une pluralité de cellules photosensibles (103) ; et
une couche (107) en un matériau revêtant une face dudit capteur (101), ledit matériau étant tel que la couleur dudit matériau varie du fait des variations d'un paramètre physique caractéristique dudit corps (201) lorsque ledit corps (201) est en contact ou en quasi contact avec ladite couche (107).

2. Dispositif selon la revendication 1, dans lequel ledit paramètre est un paramètre du groupe comprenant la température du matériau, la pression appliquée sur le matériau, le taux d'humidité du matériau, le pH d'un fluide appliqué sur le matériau, et la concentration d'un marqueur chimique ou biologique appliqué sur le matériau.

3. Dispositif selon la revendication 1 ou 2, dans lequel ledit matériau est une encre thermochromique, par exemple à base de cristaux liquides thermochromiques ou à base de leuco-colorant.

4. Dispositif selon l'une quelconque des revendications 1 à 3, dans lequel le capteur (101) comprend un substrat (105) dans et/ou sur lequel sont disposées les cellules photosensibles (103).

5. Dispositif selon la revendication 4, dans lequel la couche (107) est disposée du côté de la face du substrat (105) comportant les cellules photosensibles (103).

6. Dispositif selon la revendication 4, dans lequel la couche (107) est disposée du côté de la face du substrat (105) opposée aux cellules photosensibles (103) et le substrat (105) est transparent aux longueurs d'ondes de détection du dispositif.

7. Dispositif selon l'une quelconque des revendications 1 à 6, dans lequel chaque cellule photosensible (103) comprend un unique photodétecteur et au moins un transistor de commande du photodétecteur.

8. Dispositif selon l'une quelconque des revendications 1 à 6, dans lequel chaque cellule photosensible (103) comprend plusieurs photodétecteurs sensibles dans des gammes de longueurs d'ondes distinctes, et au moins un transistor de commande des photodétecteurs.

9. Dispositif selon l'une quelconque des revendications 1 à 8, dans lequel la couche (107) est discontinue, et est localisée uniquement en regard des cellules photosensibles (103) du capteur.

10. Procédé d'utilisation d'un dispositif selon l'une quelconque des revendications 1 à 9, comportant les étapes successives suivantes :
placer le corps (201) dont on souhaite acquérir une image en contact ou en quasi contact avec la couche (107) ;
retirer le corps (201) de la couche (107) ; et
acquérir une image de la couche (107) au moyen du capteur (101) .

11. Procédé selon la revendication 10, dans lequel le corps (201) est une portion de peau d'une partie du corps humain, par exemple une portion de la peau d'un doigt.

## Patentansprüche

1. Vorrichtung zum Erfassen eines charakteristischen Bildes eines Körpers (201), die Folgendes aufweist:
einen Bildsensor (101), der eine Vielzahl von lichtempfindlichen Zellen (103) aufweist; und
eine Schicht (107) aus einem Material, das eine Oberfläche des Sensors (101) abdeckt bzw. beschichtet, wobei das Material so beschaffen ist, dass die Farbe des Materials aufgrund der Variationen eines für den Körper (201) charakteristischen physikalischen Parameters variiert, wenn der Körper (201) in Kontakt oder fast in Kontakt mit der Schicht (107) steht.

2. Vorrichtung nach Anspruch 1, wobei der Parameter ein Parameter aus der Gruppe ist, die die Temperatur des Materials, den auf das Material ausgeübten Druck, die Feuchtigkeitsrate des Materials, den pH-Wert eines auf das Material aufgetragenen Fluids und die Konzentration eines auf das Material aufgebrachten chemischen oder biologischen Markers aufweist.

3. Vorrichtung nach Anspruch 1 oder 2, wobei das Material eine thermochrome Tinte ist, zum Beispiel basierend auf thermochromen Flüssigkristallen oder basierend auf Leukofarbstoff.

4. Vorrichtung nach einem der Ansprüche 1 bis 3, wobei der Sensor (101) ein Substrat (105) mit den lichtempfindlichen Zellen (103) aufweist, die innerhalb und/oder auf ihm angeordnet sind.

5. Vorrichtung nach Anspruch 4, wobei die Schicht (107) auf der Seite der Oberfläche des Substrats (105) angeordnet ist, die die lichtempfindlichen Zellen (103) aufweist.

6. Vorrichtung nach Anspruch 4, wobei die Schicht (107) auf der Seite der Oberfläche des Substrats (105) gegenüber den lichtempfindlichen Zellen (103) angeordnet ist und das Substrat (105) bei der Erfassungswellenlänge der Vorrichtung transparent ist.

7. Vorrichtung nach einem der Ansprüche 1 bis 6, wobei jede lichtempfindliche Zelle (103) einen einzelnen Photodetektor und wenigstens einen Transistor zum Steuern des Photodetektors aufweist.

8. Vorrichtung nach einem der Ansprüche 1 bis 6, wobei jede lichtempfindliche Zelle (103) eine Vielzahl von Photodetektoren, die in verschiedenen Wellenlängenbereichen empfindlich sind, und wenigstens einen Transistor zum Steuern der Photodetektoren aufweist.

9. Vorrichtung nach einem der Ansprüche 1 bis 8, wobei die Schicht (107) diskontinuierlich ist und nur gegenüber den lichtempfindlichen Zellen (103) des Sensors angeordnet ist.

10. Verfahren zur Verwendung der Vorrichtung nach einem der Ansprüche 1 bis 9, das die folgenden aufeinanderfolgenden Schritte aufweist:
Platzieren des Körpers (201), für den ein Bild aufgenommen werden soll, in Kontakt oder nahezu in Kontakt mit der Schicht (107);
Entfernen des Körpers (201) von der Schicht (107); und
Erfassen eines Bildes der Schicht (107) mittels des Sensors (101).

11. Verfahren nach Anspruch 10, wobei der Körper (201) ein Hautabschnitt eines Teils des menschlichen Körpers ist, zum Beispiel ein Teil der Haut eines Fingers

## Claims

1. A device for acquiring a characteristic image of a body (201), comprising:
an image sensor (101) comprising a plurality of photosensitive cells (103); and
a layer (107) of a material coating a surface of the sensor (101), said material being such that the color of said material varies due to the variations of a physical parameter characteristic of said body (201) when said body (201) is in contact or almost in contact with said layer (107).

2. The device of claim 1, wherein said parameter is a parameter from the group comprising the temperature of the material, the pressure applied to the material, the humidity rate of the material, the pH of a fluid applied on the material, and the concentration of a chemical or biological marker applied on the material.

3. The device of claim 1 or 2, wherein said material is a thermochromic ink, for example, based on thermochromic liquid crystals or based on leuco dye.

4. The device of any of claims 1 to 3, wherein the sensor (101) comprises a substrate (105) having the photosensitive cells (103) arranged inside and/or on top of it.

5. The device of claim 4, wherein the layer (107) is arranged on the side of the surface of the substrate (105) comprising the photosensitive cells (103).

6. The device of claim 4, wherein the layer (107) is arranged on the side of the surface of the substrate (105) opposite to the photosensitive cells (103) and the substrate (105) is transparent at the detection wavelength of the device.

7. The device of any of claims 1 to 6, wherein each photosensitive cell (103) comprises a single photodetector and at least one transistor for controlling the photodetector.

8. The device of any of claims 1 to 6, wherein each photosensitive cell (103) comprises a plurality of photo-detectors sensitive in different wavelength ranges, and at least one transistor for controlling the photodetectors.

9. The device of any of claims 1 to 8, wherein the layer (107) is discontinuous and is located only opposite the photosensitive cells (103) of the sensor.

10. A method of using the device of any of claims 1 to 9, comprising the successive steps of:
placing the body (201) for which an image is desired to be acquired in contact or almost in contact with the layer (107);
removing the body (201) from the layer (107); and
acquiring an image of the layer (107) by means of the sensor (101).

11. The method of claim 10, wherein the body (201) is a skin portion of a portion of the human body, for example, a portion of the skin of a finger.
